# EUROPEAN PATENT APPLICATION

(11) **EP 4 447 523 A1**
(43) Date of publication of application: **16.10.2024**
(21) Application number: 22903364.2
(22) Date of filing: 05.12.2022
(51) Int. Cl.: H04W 24/02

(54) **COMMUNICATION METHOD AND APPARATUS, TERMINAL, NETWORK DEVICE, AND MEDIUM**

(30) Priority: 09.12.2021 CN 202111498819
(71) Applicant: VIVO MOBILE COMMUNICATION CO., LTD., Dongguan, Guangdong 523863 (CN)
(72) Inventor: LIU, Xuanbing, Dongguan, Guangdong 523863 (CN)
(74) Representative: Murgitroyd & Company
(86) International application number: PCT/CN2022/136492
(87) International publication number: WO 2023/103942

(57) **Abstract**

This application discloses a communication method and apparatus, a terminal, a network device, and a medium. The communication method in embodiments of this application includes: sending, by UE, a first request message to a network device, where the first request message includes capability restriction information of the UE, and the capability restriction information is used for restricting a target capability of the UE; and restricting, by the UE, the target capability of the UE. The target capability includes at least one of the following: secondary cell SCell-related capability and secondary cell group SCG-related capability.

## Description

This application claims priority to Chinese Patent Application No. 202111498819.1, filed with the China National Intellectual Property Administration on December 9, 2021 and entitled "COMMUNICATION METHOD AND APPARATUS, TERMINAL, NETWORK DEVICE, AND MEDIUM", which is incorporated herein by reference in its entirety.

### TECHNICAL FIELD

This application pertains to the field of communication technologies, and specifically relates to a communication method and apparatus, a terminal, a network device, and a medium.

### BACKGROUND

Typically, multiple subscriber identification module (Subscriber Identification Module, SIM) cards can be installed in a multi-card terminal, and different SIM cards can constitute different user equipment (User Equipment, UE) with subscription subjects of different networks. In this way, in a case that UE1 of the multi-card terminal is in a connected state on network A, another UE of the multi-card terminal can execute a task on another network, allowing for simultaneous tasks on multiple networks.

However, radio resource collision may occur between the UE1 and the another UE, which may lead to the inability of the UE1 (and/or the another UE) to execute a task. As a result, communication performance is degraded.

### SUMMARY

Embodiments of this application provide a communication method and apparatus, a terminal, a network device, and a medium, to solve communication performance degradation.

According to a first aspect, a communication method is provided. The method includes: sending, by UE, a first request message to a network device, where the first request message includes capability restriction information of the UE, and the capability restriction information is used for restricting a target capability of the UE; and restricting, by the UE, the target capability of the UE. The target capability includes at least one of the following: secondary cell SCell-related capability and secondary cell group SCG-related capability.

According to a second aspect, a communication apparatus, where the communication apparatus includes a sending module and a restriction module. The sending module is configured to send a first request message to a network device, where the first request message includes capability restriction information of the communication apparatus, and the capability restriction information is used for restricting a target capability of the communication apparatus. The restriction module is configured to restrict the target capability of the communication apparatus. The target capability includes at least one of the following: SCell-related capability and SCG-related capability.

According to a third aspect, a communication method is provided. The method includes: receiving, by a network device, a first request message from UE, where the first request message includes capability restriction information of the UE; determining, by the network device, target parameter information of at least one second range based on the capability restriction information, where the second range includes any one of the following: frequency range, cell group CG, band, and UE; and sending, by the network device, a first response message to the UE, where the first response message includes the target parameter information. The target parameter information is used by the UE to restrict the target capability of the UE or reconfigure the UE.

According to a fourth aspect, a communication apparatus is provided. The communication apparatus includes a receiving module, a determining module, and a sending module. The receiving module is configured to receive a first request message from UE, where the first request message includes capability restriction information of the UE. The determining module is configured to determine target parameter information of at least one second range based on the capability restriction information, where the second range includes any one of the following: frequency range, cell group CG, band, and UE. The sending module is configured to send a first response message to the UE, where the first response message includes the target parameter information. The target parameter information is used by the UE to restrict the target capability of the UE or reconfigure the UE.

According to a fifth aspect, a terminal is provided. The terminal includes a processor and a memory. The memory stores a program or instructions capable of running on the processor. When the program or instructions are executed by the processor, the steps of the method according to the first aspect are implemented.

According to a sixth aspect, a terminal is provided, including a processor and a communication interface. The communication interface is configured to send a first request message to a network device. The first request message includes capability restriction information of the terminal. The capability restriction information is used to restrict a target capability of the terminal. The processor is configured to restrict the target capability of the terminal. The target capability includes at least one of the following: SCell-related capability and SCG-related capability.

According to a seventh aspect, a network device is provided. The network device includes a processor and a memory. The memory stores a program or instructions capable of running on the processor. When the program or instructions are executed by the processor, the steps of the method according to the third aspect are implemented.

According to an eighth aspect, a network device is provided, including a processor and a communication interface. The communication interface is configured to receive a first request message from UE, where the first request message includes capability restriction information of the UE. The processor is configured to determine target parameter information of at least one second range based on the capability restriction information, where the second range includes any one of the following: frequency range, cell group CG, band, and UE. The communication interface is further configured to send a first response message to the UE, where the first response message includes the target parameter information. The target parameter information is used by the UE to restrict a target capability of the UE or reconfigure the UE.

According to a ninth aspect, a communication system is provided, including a terminal and a network device. The terminal may be configured to execute the steps of the method according to the first aspect, and the network device may be configured to execute the steps of the method according to the third aspect.

According to a tenth aspect, a readable storage medium is provided, where a program or instructions are stored in the readable storage medium, and when the program or the instructions are executed by a processor, the steps of the method according to the first aspect are implemented, or the steps of the method according to the third aspect are implemented.

According to an eleventh aspect, a chip is provided. The chip includes a processor and a communication interface, the communication interface is coupled to the processor, and the processor is configured to run a program or instructions to implement the method according to the first aspect or the method according to the third aspect.

According to a twelfth aspect, a computer program/program product is provided. The computer program/program product is stored in a storage medium, and the computer program/program product is executed by at least one processor so as to implement the steps of the method according to the first aspect or the method according to the third aspect.

In the embodiments of this application, the UE can send the first request message including the capability restriction information of the UE to the network device, and the capability restriction information is used for restricting the target capability (that is, the SCell-related capability (and/or the SCG-related capability)) of the UE, so that the UE can restrict the SCell-related capability (and/or the SCG-related capability) of the UE. The UE can send the capability restriction information of the UE to the network device, and restrict the SCell-related capability (and/or the SCG-related capability) of the UE to reduce radio resources occupied by the UE. Therefore, it can avoid that the UE occupies too many radio resources, so that radio resource collision between the UE and another UE can be avoided, thereby avoiding that the UE (and/or the another UE) cannot execute a task, and thus improving communication performance.

### BRIEF DESCRIPTION OF DRAWINGS

FIG. 1 is a block diagram of a wireless communication system according to an embodiment of this application;
FIG. 2 is a first schematic flowchart of a communication method according to an embodiment of this application;
FIG. 3 is a second schematic flowchart of a communication method according to an embodiment of this application;
FIG. 4 is a third schematic flowchart of a communication method according to an embodiment of this application;
FIG. 5 is a fourth schematic flowchart of a communication method according to an embodiment of this application;
FIG. 6 is a fifth schematic flowchart of a communication method according to an embodiment of this application;
FIG. 7 is a sixth schematic flowchart of a communication method according to an embodiment of this application;
FIG. 8 is a seventh schematic flowchart of a communication method according to an embodiment of this application;
FIG. 9 is a first schematic structural diagram of a communication apparatus according to an embodiment of this application;
FIG. 10 is a second schematic structural diagram of a communication apparatus according to an embodiment of this application;
FIG. 11 is a schematic structural diagram of a communication device according to an embodiment of this application;
FIG. 12 is a schematic diagram of a hardware structure of a terminal according to an embodiment of this application; and
FIG. 13 is a structural diagram of a hardware structure of a network device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application fall within the protection scope of this application.

The following describes the terms used in the embodiments of this application.

### 1. Multi-card communication device

A multi-card communication device can be installed with multiple SIM cards. The multiple SIM cards may include a physical SIM card in a form of physical card, and may also include an electronic SIM card (that is, eSIM), so that the multi-card communication device can camp on multiple networks at the same time by using the multiple SIM cards, and send and receive service data on the multiple networks at the same time (or send and receive service data on the multiple networks at the same time over a specific band, or send and receive service data on the multiple networks in a time-division manner).

Communication performance of multiple SIM cards of a multi-card communication device is limited by a capability of the multi-card communication device. Therefore, multi-card communication devices are further divided into: single-transmit-single-receive multi-card communication devices, single-transmit-dual-receive multi-card communication devices, and dual-transmit-dual-receive multi-card communication devices.

### 2. User equipment (User Equipment, UE)

A multi-card communication device may contain multiple UEs, and the multiple UEs are referred to as multi-SIM UEs. Each UE can be viewed as one subscription subject, and each subscription subject can be represented by one SIM card (or electronic SIM card information).

Each SIM card (or electronic SIM card information) stores an identity of a corresponding subscription subject; where the identity may include at least one of the following: subscription permanent identifier (Subscription Permanent Identifier, SUPI), international mobile subscription identity (International Mobile Subscription Identity, IMSI), and the like.

It can be understood that when a multi-card communication device has multiple SIM cards (or electronic SIM card information), the multi-card communication device and the subscription subjects corresponding to the multiple SIM cards form multiple UEs.

### 3. Capability of UE

In the embodiments of this application, a capability of UE can be understood as a wireless access capability of the UE.

When the UE is in a connected state, a network device may initiate a capability transmission procedure to the UE to obtain capability information of the UE. Therefore, after receiving a UE capability enquiry message (UECapabilityEnquiry), the UE may send a UE capability information message (UECapabilityInformation) to the network device to report the capability information of the UE to the network device.

### 4. Other terms

The terms "first", "second", and the like in the specification and claims of this application are used to distinguish between similar objects rather than to describe a specific order or sequence. It should be understood that the terms used in this way are interchangeable in appropriate circumstances such that the embodiments of this application can be implemented in other orders than the order illustrated or described herein. In addition, objects distinguished by "first" and "second" are generally of a same type, and the quantities of the objects are not limited. For example, there may be one or more first objects. In addition, in this specification and claims, "and/or" indicates at least one of the connected objects, and the character "/" generally indicates an "or" relationship between the contextually associated objects.

It should be noted that technologies described in the embodiments of this application are not limited to a long term evolution (Long Term Evolution, LTE) or LTE-Advanced (LTE-Advanced, LTE-A) system, and may also be applied to other wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency Division Multiple Access, SC-FDMA), and other systems. The terms "system" and "network" in the embodiments of this application are often used interchangeably, and the technology described herein may be used in the above-mentioned systems and radio technologies as well as other systems and radio technologies. However, in the following descriptions, a new radio (New Radio, NR) system is described for illustration purposes, NR terms are used in most of the following descriptions, and these technologies may also be applied to other applications than the NR system application, for example, the 6th generation (6^{th} Generation, 6G) communication system.

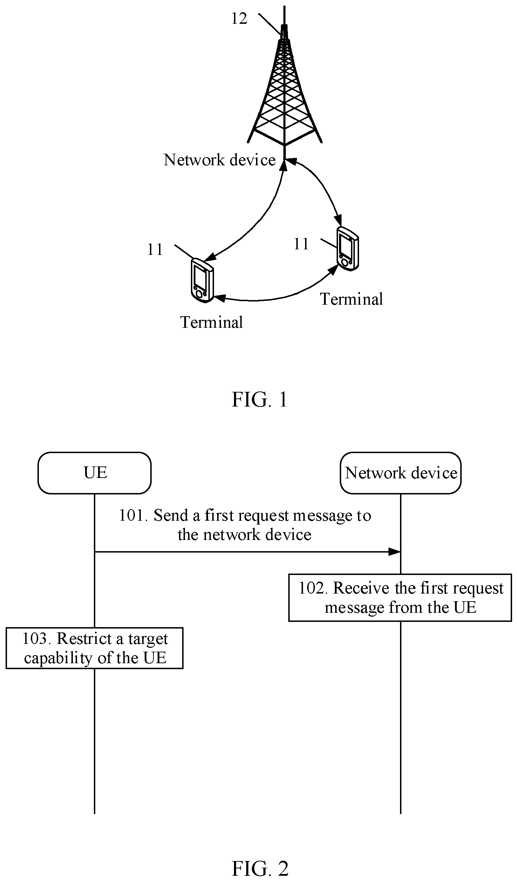

FIG. 1 is a block diagram of a wireless communication system to which the embodiments of this application are applicable. The wireless communication system includes a terminal 11 and a network device 12. The terminal 11 may be a terminal-side device, such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (VUE), or pedestrian user equipment (PUE), a smart appliance (a home appliance with a wireless communication function, for example, a refrigerator, a television, a washing machine, or furniture), a game console, a personal computer (personal computer, PC), a teller machine, or a self-service machine. The wearable device includes a smart watch, a smart band, a smart earphone, smart glasses, smart jewelry (a smart bangle, a smart bracelet, a smart ring, a smart necklace, a smart ankle bangle, a smart anklet, or the like), a smart wristband, smart clothing, or the like. It should be noted that the specific type of the terminal 11 is not limited in the embodiments of this application. The network device 12 may include an access network device or a core network device. The access network device 12 may also be referred to as a radio access network device, a radio access network (Radio Access Network, RAN), a radio access network function, or a radio access network unit. The access network device 12 may include a base station, a WLAN access point, a Wi-Fi node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmission reception point (Transmitting Receiving Point, TRP), or other appropriate terms in the art. Provided that the same technical effects are achieved, the base station is not limited to any specific technical term. It should be noted that in the embodiments of this application, only the base station in the NR system is used as an example for description, although the specific type of the base station is not limited.

A communication method and apparatus, a terminal, a network device, and a medium provided in the embodiments of this application are hereinafter described in detail by using some embodiments and application scenarios thereof with reference to the accompanying drawings.

FIG. 2 is a flowchart of a communication method according to an embodiment of this application. As shown in FIG. 2, the communication method provided in this embodiment of this application may include the following steps 101 to 103.

Step 101. UE sends a first request message to a network device.

Optionally, in a possible implementation of this embodiment of this application, the UE may be a communication device. It can be understood that the UE may be a single-card communication device.

Optionally, in another possible implementation of this embodiment of this application, the UE may be any UE of a multi-card communication device. It can be understood that the UE is formed by the multi-card communication device and a subscription subject corresponding to any SIM card.

Optionally, in this embodiment of this application, in a case that the UE is in a connected state, the UE may send the first request message to the network device; or in a case that the UE is in an idle state, the UE may first switch from the idle state to a connected state, and then send the first request message to the network device.

In this embodiment of this application, the first request message is used to request the network device to restrict a target capability of the UE. The first request message includes capability restriction information of the UE, and the capability restriction information is used for restricting the target capability of the UE.

Optionally, in this embodiment of this application, the first request message may be a radio resource control RRC message.

For example, the first request message may be a UE assistance information (UE Assistance Information) message.

In this embodiment of this application, the target capability includes at least one of the following: secondary cell (Secondary Cell, SCell)-related capability and secondary cell group (Secondary Cell Group, SCG)-related capability.

It should be noted that the "SCell-related capability" can be understood as a capability of an SCell of the UE, and/or a capability of an SCell of at least one another UE associated with the UE. The "SCG-related capability" can be understood as a capability of an SCG of the UE, and/or a capability of an SCG of at least one another UE associated with the UE. The UE and the at least one another UE may both be UEs of a same multi-card communication device.

Optionally, in this embodiment of this application, the capability restriction information includes at least one of the following:
first indication information;
first capability preference information;
first configuration preference information;
first related information;
first measurement information; and
first purpose indication.

In this embodiment of this application, the first indication information is used to indicate the network device to restrict the target capability of the UE.

Further optionally, in this embodiment of this application, the first indication information includes at least one of the following:
restriction information;
first capability indication information; and
capability restriction duration information.

The restriction information is used to indicate that the UE needs to restrict the target capability of the UE.

Specifically, an attribute value of the restriction information may be TRUE or 1. It can be understood that the attribute value being TRUE (or 1) indicates that the UE needs to temporarily restrict the target capability of the UE.

The first capability indication information is used to indicate whether to use a maximum capability value of the target capability.

Specifically, the first capability indication information may indicate not to use the maximum capability value of the target capability.

The capability restriction duration information is used to indicate a duration of restricting the target capability of the UE.

It can be understood that after the target capability of the UE is restricted for the duration, the capability restriction is canceled, and the UE may restore the target capability of the UE.

In this embodiment of this application, the first capability preference (Capability Preference) information is used for configuring a capability restriction parameter of the target capability by frequency range, configuring a capability restriction parameter of the target capability by cell group (Cell Group, CG), configuring a capability restriction parameter of the target capability by band, or configuring a capability restriction parameter of the target capability by UE.

It can be understood that the UE may separately provide the capability restriction parameter of the target capability by frequency range (per FR), cell group (per CG), band, or by UE.

Further optionally, in this embodiment of this application, the capability restriction parameter includes at least one of the following:
first SCell number;
first uplink (Uplink, UL) component carrier (Component Carrier, CC) capability;
first downlink (Downlink, DL) CC capability;
first bandwidth capability;
whether an SCG is supported or not; and
first multiple-input multiple-output (Multi-Input Multi-Output, MIMO) layer number.

The first SCell number includes any one of the following: temporary maximum (max) number of supportable SCells, temporary reduced-to (reduced) number of supportable SCells, temporary restricted (restricted) number of supportable SCells, temporary maximum number of activatable SCells, temporary reduced-to number of activatable SCells, and temporary restricted number of activatable SCells.

The first UL CC capability includes any one of the following: temporary maximum supportable UL CC capability, temporary reduced-to supportable UL CC capability, temporary restricted-to supportable UL CC capability, temporary maximum activatable UL CC capability, temporary reduced-to activatable UL CC capability, and temporary restricted-to activatable UL CC capability.

The first DL CC capability includes any one of the following: temporary maximum supportable DL CC capability, temporary reduced-to supportable DL CC capability, temporary restricted-to supportable DL CC capability, temporary maximum activatable DL CC capability, temporary reduced-to activatable DL CC capability, and temporary restricted-to activatable DL CC capability.

The first bandwidth capability includes any one of the following: temporary maximum bandwidth capability, temporary reduced-to bandwidth capability, and temporary restricted-to bandwidth capability. It can be understood that the UE or network device may choose to deactivate or release an SCell by bandwidth, or indicate the UE to perform BWP switching.

The first MIMO layer number includes any one of the following: temporary maximum MIMO layer number, temporary reduced-to MIMO layer number, and temporary restricted MIMO layer number.

The first bandwidth capability may specifically be a bandwidth capability of a specific SCell, or a bandwidth capability of all cells. The first MIMO layer number may specifically be the number of MIMO layers of a specific SCell, or the number of MIMO layers of all cells.

In this embodiment of this application, the first configuration preference information is used to indicate an SCell to be deactivated or released.

Further optionally, in this embodiment of this application, the first configuration preference information includes at least one of the following:
SCell deactivation indication;
SCell release indication;
deactivated SCell release indication;
SCell indication information;
SCG deactivation indication; and
SCG release indication.

The SCell deactivation indication is used to indicate to deactivate N configured SCells, N being a positive integer.

The SCell release indication is used to indicate to release M configured SCells, M being a positive integer.

The deactivated SCell release indication is used to indicate to release R deactivated SCells, R being a positive integer.

The SCell indication information is used to indicate a target SCell to be released or deactivated, where the SCell indication information includes at least one of the following of the target SCell: CC information and SCell identifier.

The SCG deactivation indication is used to indicate to deactivate a configured SCG.

The SCG release indication is used to indicate to release a configured SCG.

Specifically, the SCell identifier may specifically be an SCell ID.

In this embodiment of this application, the first related information is related information of an SCell to be deactivated or released.

Further optionally, in this embodiment of this application, the first related information includes at least one of the following:
frequency range information;
CG information;
node information; and
radio access technology (Radio Access Technology, RAT) information.

For example, the frequency range information may indicate FR1 or FR2; the CG information may indicate a master cell group (Master Cell Group, MCG) or an SCG; the node information may indicate a master node (Master Node, MN) or secondary node (Secondary Node, SN); and the RAT information may indicate long term evolution (Long Term Evolution, LTE) or new radio (New Radio, NR).

In this embodiment of this application, the measurement information is measurement information of at least one SCell of the UE.

Further optionally, in this embodiment of this application, the first measurement information includes at least one of the following:
measurement report of the at least one SCell; and
channel state information (Channel State Information, CSI) report of an activated SCell in the at least one SCell.

The measurement report includes at least one of the following: measurement report based on tracking reference signal (Tracking Reference Signal, TRS), reference signal received power (Reference Signal Receiving Power, RSRP) measurement report, and measurement report based on synchronization signal block (Synchronization Signal Block, SSB).

In this embodiment of this application, the first purpose indication is used to indicate a request purpose of the first request message.

Further optionally, in this embodiment of this application, the first purpose indication is used to indicate that the first request message is for a multi-card purpose.

Further optionally, in this embodiment of this application, the UE may be only allowed to send a request message for a multi-card purpose. The request message is used for requesting the network device to restrict the target capability of the UE.

Therefore, it can be known that since the capability restriction information may include at least one of the first indication information, the first capability preference information, the first configuration preference information, the first related information, the first measurement information, and the first purpose indication, the UE (or the network device) can accurately restrict the target capability of the UE to avoid a situation that requirements of the UE are still not met after the UE restricts the target capability of the UE.

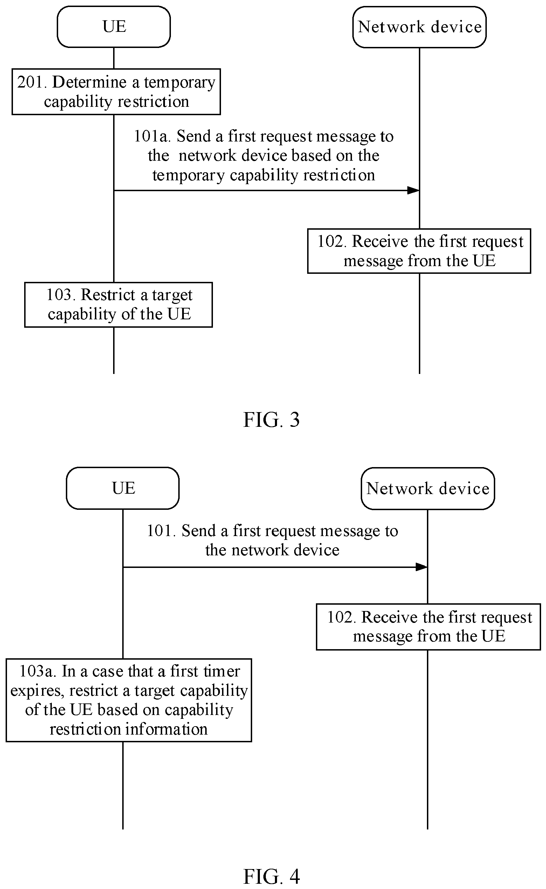

Optionally, in this embodiment of this application, with reference to FIG. 2, as shown in FIG. 3, before step 101, the communication method provided in this embodiment of this application may further include the following step 201, and step 101 may be specifically implemented through the following step 101a.

Step 201. The UE determines a temporary capability restriction.

In this embodiment of this application, the temporary capability restriction includes any one of the following: number of supportable SCells, number of supportable CCs, number of activatable SCells, number of activatable CCs, whether to support an SCG or not, and whether to activate an SCG or not.

Further optionally, in this embodiment of this application, the UE may determine the temporary capability restriction based on target information.

The target information may include at least one of the following: configuration information sent by the network device, information about a task to be executed by the UE, and maximum capability information of the UE.

Step 101a. The UE sends the first request message to the network device based on the temporary capability restriction.

Further optionally, in this embodiment of this application, the UE may determine the capability restriction information based on the temporary capability restriction so that the UE may send the first request message to the network device.

Therefore, it can be known that the UE can send the first request message to the network device based on the temporary capability restriction determined, thereby avoiding a situation that restricting the target capability of the UE does not meet requirements of the UE. In this way, the communication performance can be improved.

Optionally, in this embodiment of this application, the capability restriction information is restriction information of the UE in a target cell group, and the target cell group is a master cell group MCG or an SCG. Specifically, step 101 may be specifically implemented through the following step 101b, step 101c, or step 101d.

Step 101b. The UE sends, in the MCG, the first request message to the network device.

It can be understood that regardless of whether the capability restriction information is restriction information of the UE in the MCG or SCG, the UE can send the first request message in the MCG by default.

Further optionally, in this embodiment of this application, the network device includes an MN and an SN, and after the UE sends the first request message, the MN may send the first request message or capability restriction information to the SN.

Step 101c. In a case that the target cell group is the MCG, the UE sends, in the MCG, the first request message to the network device.

Further optionally, in this embodiment of this application, the network device includes an MN and an SN, and after the UE sends the first request message, the MN may send the first request message or capability restriction information to the SN.

Step 101d. In a case that the target cell group is the SCG, the UE sends, in the SCG or MCG, the first request message to the network device.

Further optionally, in this embodiment of this application, the network device includes an MN and an SN, and after the UE sends the first request message, the MN may send the first request message or capability restriction information to the SN.

Step 102. The network device receives the first request message from the UE.

Step 103. The UE restricts the target capability of the UE.

Optionally, in this embodiment of this application, the restricting the target capability of the UE includes at least one of the following:
restricting the number of SCells;
deactivating at least one SCell;
deactivating an SCG;
releasing at least one SCell; and
releasing an SCG.

It can be understood that restricting the target capability of the UE can reduce radio resources occupied by the UE.

Optionally, in this embodiment of this application, the UE may directly restrict the target capability of the UE based on the capability restriction information; or the UE may restrict target capability of the UE based on parameter information sent by the network device. The parameter information is determined by the network device based on the capability restriction information.

In this embodiment of this application, the UE may restrict the target capability based on at least one range to restrict the target capability of the UE. The range includes any one of the following: frequency range, CG, band, and UE.

The following describes in detail how the UE restricts the target capability of the UE by using different examples.

### Example 1

Optionally, in a possible implementation of this embodiment of this application, the UE may directly restrict the target capability of the UE based on the capability restriction information. Specifically, with reference to FIG. 2, as shown in FIG. 4, the foregoing step 103 may be specifically implemented by using the following step 103a.

Step 103a. In a case that a first timer expires, the UE restricts the target capability of the UE based on the capability restriction information.

Further optionally, in this embodiment of this application, in a case that a first timer expires and the UE has not received a first response message, the UE may directly restrict the target capability of the UE based on the capability restriction information. The first response message may be a response message sent by the network device based on the capability restriction information.

Further optionally, in this embodiment of this application, the UE may determine parameter information of at least one range based on the capability restriction information, so that the UE can restrict the target capability of that range based on the parameter information of that range to restrict the target capability of the UE.

The parameter information may include at least one of the following: number of SCells to be restricted, identifier of SCell to be deactivated, identifier of SCG to be deactivated, identifier of SCell to be released, and identifier of SCG to be released.

Optionally, in this embodiment of this application, before step 103a, the communication method provided in this embodiment of this application may further include the following step 301.

Step 301. The UE starts a first timer when the UE sends the first request message.

In this embodiment of this application, a timing duration of the first timer is agreed in a protocol or configured by the network device.

Further optionally, in this embodiment of this application, in a case that the timing duration of the first timer is configured for the UE or agreed in a protocol, the UE directly starts the first timer when sending the first request message; or
in a case that the timing duration of the first timer is configured for the UE or agreed in a protocol and the first request message includes the capability restriction information, the UE directly starts the first timer when sending the first request message.

During the operation of the first timer, the UE may listen for a response message from the network device, and the UE cannot send a request message the same as the first request message, or the UE cannot send the first request message.

Certainly, after the UE starts the first timer, the UE may further perform an operation on the first timer. This operation may include any one of the following: stopping the timer, updating the duration of the timer, resetting the timer, and the like. Examples are given below for description.

Optionally, in this embodiment of this application, after step 301, the communication method provided in this embodiment of this application may further include the following step 302.

Step 302. The UE stops the first timer in a case that the UE has received the first response message and the first timer is running.

In this embodiment of this application, the first response message is a response message sent by the network device based on the capability restriction information.

Further optionally, in this embodiment of this application, in a case that the UE has received the first response message and the first timer has not yet expired, the UE may stop the first timer and restrict the target capability of the UE based on the first response message.

Since it is possible that the network device does not respond to the first request message after the UE sends the first request message to the network device, the UE may be unable to restrict the target capability of the UE, and thus the UE (and/or the another UE) cannot execute a task. Therefore, the UE may start the first timer when sending the first request message, and in a case that the first timer expires, the UE may directly restrict the target capability of the UE based on the capability restriction information.

Therefore, it can be known that since the UE can directly restrict the target capability of the UE in a case that the first timer expires, the following situation can be avoided: as a result of the network device not responding to the first request message, the UE cannot restrict the target capability of the UE. This can avoid radio resource collision between the UE and the another UE, avoiding a situation that the UE (and/or the another UE) cannot execute a task, thereby improving communication performance.

### Example 2

Optionally, in another possible implementation of this embodiment of this application, the UE may first receive, from the network device, a response message sent by the network device based on the capability restriction information and restrict the target capability of the UE based on that response message. Specifically, after step 102, the communication method provided in this embodiment of this application may further include the following step 401, and step 103 may be specifically implemented through the following step 103b.

Step 401. The network device sends the first response message to the UE based on the capability restriction information.

In this embodiment of this application, the first response message is a response message sent by the network device based on the capability restriction information.

Further optionally, in this embodiment of this application, the first response message is used to indicate that the network device allows the UE to restrict the target capability of the UE, and the first response message may specifically be an acknowledgement (Acknowledgement, ACK) message.

Step 103b. In a case that the UE has received a first response message, the UE restricts the target capability of the UE based on the first response message.

Further optionally, in this embodiment of this application, the UE may determine parameter information of at least one range based on the first response message by using the capability restriction information, so that the UE can restrict the target capability of that range based on the parameter information of that range to restrict the target capability of the UE.

In this implementation, after the UE sends the first request message to the network device, the UE may receive the first response message from the network device, so the UE can determine that the network device allows the UE to restrict the target capability of the UE, and directly restrict the target capability of the UE based on the capability restriction information.

### Example 3

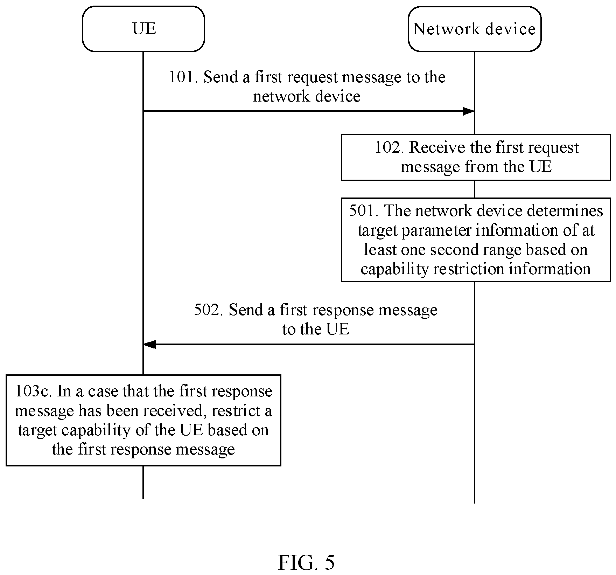

Optionally, in yet another possible implementation of this embodiment of this application, the UE may first receive a first response message from the network device. The first response message is sent by the network device in response to the first request message, and the first response message includes parameter information of at least one range. The UE may restrict the target capability of that range based on the parameter information of that range. Specifically, with reference to FIG. 2, as shown in FIG. 5, after step 102, the communication method provided in this embodiment of this application may further include the following steps 501 and 502, and step 103 may be specifically implemented through the following step 103c.

Step 501. The network device determines target parameter information of at least one second range based on the capability restriction information.

In this embodiment of this application, the second range includes any one of the following: frequency range, cell group CG, band, and UE.

Optionally, in this embodiment of this application, the target parameter information may include at least one of the following: number of SCells to be restricted, identifier of SCell to be deactivated, identifier of SCG to be deactivated, identifier of SCell to be released, and identifier of SCG to be released.

Further optionally, in this embodiment of this application, the SCell to be deactivated (and/or the SCell to be released) may specifically be a poor-network-quality SCell determined by the network device based on the capability restriction information.

The SCG to be deactivated (and/or the SCG to be released) may specifically be an SCG corresponding to the poor-network-quality SCell determined by the network device based on the capability restriction information.

Optionally, in this embodiment of this application, the network device includes an MN and an SN. The first request message is sent by the UE in an MCG to the network device. Specifically, before step 501, the communication method provided in this embodiment of this application may further include the following step 601.

Step 601. The MN sends the first request message or the capability restriction information to the SN.

Further optionally, in this embodiment of this application, after the MN sends the first request message or capability restriction information to the SN, the SN may determine the target parameter information of at least one second range based on the capability restriction information.

Step 502. The network device sends the first response message to the UE.

In this embodiment of this application, the first response message includes target parameter information. The target parameter information is used by the UE to restrict the target capability of the UE or reconfigure the UE.

Further optionally, in this embodiment of this application, the first response message may specifically be a reconfiguration message. The first response message may include an SCell or SCG to be deactivated or released.

Step 103c. In a case that the UE has received a first response message, the UE restricts the target capability of the UE based on the first response message.

In this embodiment of this application, the first response message is a response message sent by the network device based on the capability restriction information.

In this implementation, after the UE sends the first request message to the network device, the network device may determine the target parameter information of at least one range based on the capability restriction information, so the UE can receive the first response message from the network device, where the first response message includes the target parameter information of at least one range, and restrict the target capability of the UE based on the target parameter information of at least one range.

Therefore, it can be known that since the network device can receive the capability restriction information from the UE and send the target parameter information of at least one second range determined to the UE based on that capability restriction information, the UE can restrict the target capability of the UE (or reconfigure the UE) based on the target parameter information of at least one second range, to reduce radio resources occupied by the UE. Therefore, it can avoid a situation that the UE occupies too many radio resources, thereby avoiding radio resource collision between the UE and another UE, and thus avoiding a situation that the UE (and/or the another UE) cannot execute a task. In this way, communication performance can be improved.

In communication method provided in this embodiment of this application, the UE can send the first request message including the capability restriction information of the UE to the network device, and the capability restriction information is used for restricting the target capability (that is, the SCell-related capability (and/or the SCG-related capability)) of the UE, so that the UE can restrict the SCell-related capability (and/or the SCG-related capability) of the UE. The UE can send the capability restriction information of the UE to the network device, and restrict the SCell-related capability (and/or the SCG-related capability) of the UE to reduce radio resources occupied by the UE. Therefore, it can avoid that the UE occupies too many radio resources, so that radio resource collision between the UE and another UE can be avoided, thereby avoiding that the UE (and/or the another UE) cannot execute a task, and thus improving communication performance.

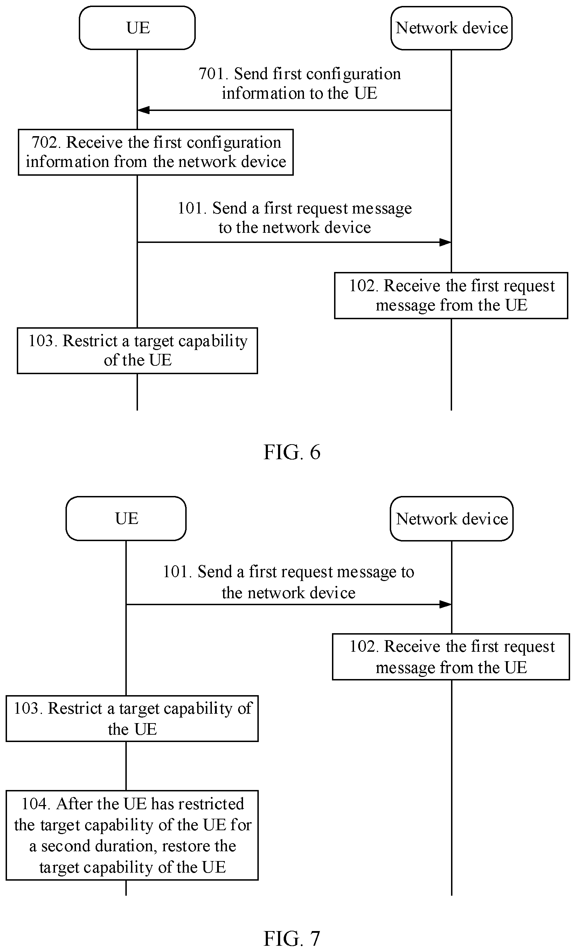

Optionally, in this embodiment of this application, with reference to FIG. 2, as shown in FIG. 6, before step 101, the communication method provided in this embodiment of this application may further include the following step 701 and step 702.

Step 701. The network device sends first configuration information to the UE.

Step 702. The UE receives the first configuration information from the network device.

In this embodiment of this application, the first configuration information is used to indicate to the UE whether to send the first request message or not.

Further optionally, in this embodiment of this application, the UE may receive a first message from the network device, and the first message includes the first configuration information. The first message may include any one of the following: system message and RRC reconfiguration message.

For example, in a case where the first message is an RRC reconfiguration message, the first configuration information may be carried in OtherConfig IE.

Further optionally, in this embodiment of this application, the first configuration information includes at least one of the following:
whether restricting an SCell-related capability is supported or not;
whether restricting an SCG-related capability is supported or not;
whether deactivating an SCell is supported or not;
whether releasing an SCell is supported or not;
whether deactivating an SCG is supported or not;
whether releasing an SCG is supported or not;
whether first information in the capability restriction information is supported or not; and timing duration of a first timer.

The first information includes at least one of the following: first configuration preference information and first measurement information.

In this embodiment of this application, before the UE sends the first request message to the network device, the network device may configure whether the UE can send the first request message, so in a case that the network device configures the UE to send the first request message, the UE may send the first request message to the network device.

Certainly, after the UE restricts the target capability of the UE, the UE may further restore the target capability of the UE.

Optionally, in this embodiment of this application, the restoring the target capability corresponding to the UE includes at least one of the following:
derestricting the number of SCells;
activating an SCell;
activating an SCG;
adding an SCell; and
adding an SCG.

Optionally, in a possible implementation of this embodiment of this application, the target capability of the UE may be restored after the UE has restricted the target capability of the UE for a preset duration. Specifically, with reference to FIG. 2, as shown in FIG. 7, after step 103, the communication method provided in this embodiment of this application may further include the following step 104.

Step 104. After the UE has restricted the target capability of the UE for a second duration, the UE restores the target capability of the UE.

In this embodiment of this application, the second duration is a duration for restricting the target capability of the UE as indicated by the capability restriction information.

Further optionally, in this embodiment of this application, the second duration may specifically be a duration indicated by the capability restriction duration information in the first indication information in the capability restriction information.

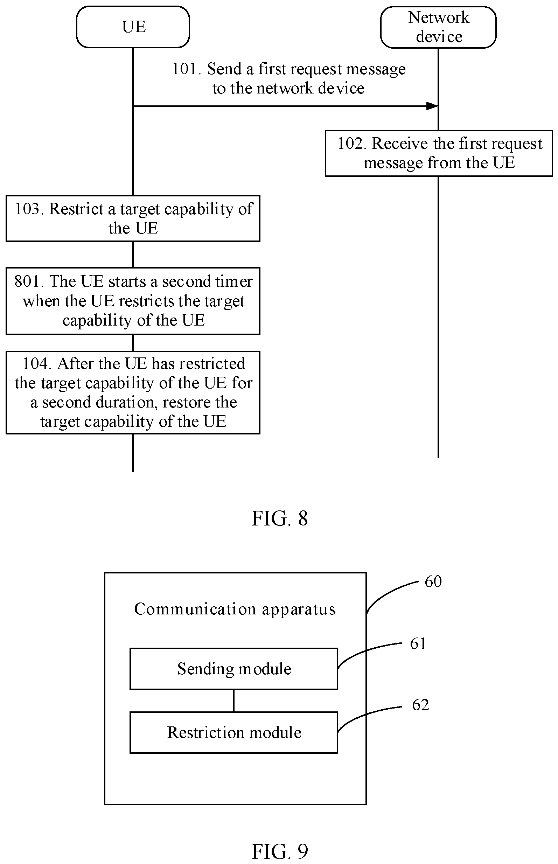

Optionally, in this embodiment of this application, with reference to FIG. 7, as shown in FIG. 8, before step 104, the communication method provided in this embodiment of this application may further include the following step 801.

Step 801. The UE starts a second timer when the UE restricts the target capability of the UE.

In this embodiment of this application, a timing duration of the second timer is the second duration.

It can be understood that in a case that the second timer expires, the UE can restore the target capability of the UE.

Further optionally, in this embodiment of this application, the timing duration of the second timer may be configured by the network device or agreed in a protocol.

Optionally, in another possible implementation of this embodiment of this application, the UE may send a request message to the network device to request the network device to restore the target capability of the UE. Specifically, after step 103, the communication method provided in this embodiment of this application may further include the following steps 105 and 106.

Step 105. The UE sends a second request message to the network device.

Further optionally, in this embodiment of this application, when the UE is in a connected state, the UE may send the second request message to the network device; or when the UE is in an idle state, the UE may first switch from the idle state to a connected state, and then send the second request message to the network device.

In this embodiment of this application, the second request message is used to request the network device to restore the target capability of the UE. The second request message includes capability restoration information of the UE, and the capability restoration information is used for restoring the target capability of the UE.

Optionally, in this embodiment of this application, the capability restoration information includes at least one of the following:
second indication information; and
second capability preference information.

In this embodiment of this application, the second indication information is used to indicate the network device to restore the target capability of the UE.

In this embodiment of this application, the second capability preference information is used for separately configuring a capability restoration parameter of the target capability by frequency range, separately configuring a capability restoration parameter of the target capability by CG, separately configuring a capability restoration parameter of the target capability by band, or separately configuring a capability restoration parameter of the target capability by UE.

Further optionally, in this embodiment of this application, the capability restoration information may further include configuration preference information. An information element of the configuration preference information is empty.

Further optionally, in this embodiment of this application, the second indication information includes at least one of the following:
restoration information; and
second capability indication information.

The restoration information is used to indicate that the UE needs to restore the target capability of the UE.

Specifically, an attribute value of the restoration information may be FALSE or 0. It can be understood that the attribute value being FALSE (or 0) indicates that the UE needs to restore the target capability of the UE.

The second capability indication information is used to indicate to use a maximum capability value of the target capability.

Further optionally, in this embodiment of this application, in a case that the capability restriction information is restriction information of the UE in an MCG, the UE may send, in the MCG, the second request message to the network device.

In a case that the capability restriction information is restriction information of the UE in an SCG, the UE may send, in the SCG, the second request message to the network device.

Step 106. The UE restores the target capability of the UE.

Further optionally, in a possible implementation of this embodiment of this application, the UE may determine parameter information of at least one range (for example, at least one first range in the following embodiments) based on the capability restoration information, so the UE may restore the target capability of the UE based on the parameter information of the first range.

Specifically, in a case that a third timer expires, the UE may determine parameter information of at least one range (for example, at least one first range in the following embodiments) based on the capability restoration information. When the UE sends the second request message, the UE starts the third timer. A timing duration of the third timer may be configured by the network device or agreed in a protocol.

Further optionally, in another possible implementation of this embodiment of this application, the UE may first receive a second response message from the network device, where the second response message is sent by the network device in response to the second request message, and then determine parameter information of at least one range (for example, at least one first range in the following embodiments) based on the capability restoration information, so the UE may restore a target capability in that range based on the parameter information of the first range.

The second response message is used to indicate that the network device allows the UE to restore the target capability of the UE, and the second response message may specifically be an acknowledgement (Acknowledgement, ACK) message.

Further optionally, in yet another possible implementation of this embodiment of this application, the UE may first receive a second response message from the network device. The second response message is sent by the network device in response to the second request message, and the second response message includes parameter information of at least one first range. The UE may restore the target capability of that range based on the parameter information of the first range.

Optionally, in this embodiment of this application, step 106 may be specifically implemented by the following step 106a.

Step 106a. The UE restores the target capability based on at least one first range.

In this embodiment of this application, the first range includes any one of the following: frequency range, CG, band, and UE.

Further optionally, in this embodiment of this application, the UE may restore the target capability of the UE by frequency range (per FR), cell group (per CG), band, or by UE.

Therefore, it can be known that since the UE can restore the target capability of the UE, it can avoid a situation that a data transmission rate of the UE cannot be maximized caused by restricting the target capability of the UE.

Certainly, after the capability restriction information is received, the network device may further store information related to the capability restriction information. The information related to the capability restriction information may be the capability restriction information itself or information obtained based on the capability restriction information. Examples are given below for description.

Optionally, in this embodiment of this application, after step 102, the communication method provided in this embodiment of this application may further include the following step 901.

Step 901. The network device stores second information.

In this embodiment of this application, the second information includes at least one of the following: the capability restriction information, and target parameter information of at least one second range.

Therefore, it can be known that since the network device can store the capability restriction information and/or target parameter information of at least one second range, in a case that the UE requests the network device to restrict the target capability of the UE again, the network device can directly send the first response message to the UE without re-acknowledgement from the network device.

Optionally, in this embodiment of this application, after step 901, the communication method provided in this embodiment of this application may further include the following step 902.

Step 902. In case that a preset condition is met, the network device releases the second information.

Optionally, in this embodiment of this application, the preset condition includes any one of the following:
the network device has released a connection of the UE; and
the network device has received a second request message sent by the UE.

In this embodiment of this application, the second request message is used to request the network device to restore the target capability of the UE.

In this embodiment of this application, in a case that the preset condition is met, it can be assumed that the UE may no longer need to restrict the target capability of the UE. Therefore, the network device may release the second information.

Further optionally, in this embodiment of this application, in a case that the preset condition includes the network device having received the second request message sent by the UE, the network device may send a second response message to the UE based on a capability restoration parameter in the second request message. The second response message may specifically be an ACK message. The UE may restore the target capability of the UE based on the capability restoration information. Alternatively, the network device may determine a capability restoration parameter of at least one second range based on a capability restoration parameter in the second request message, so the network device may send a second response message to the UE. The second response message includes the capability restoration parameter of at least one second range, so the UE may restore the target capability of the UE based on the capability restoration parameter of at least one second range.

Therefore, it can be known that since the network device may release the second information in case that the preset condition is met, storage space in the network device can be saved.

Optionally, in this embodiment of this application, the network device includes a source cell and a target cell. Specifically, after step 102, the communication method provided in this embodiment of this application may further include the following steps 1001 and 1002.

Step 1001. The source cell sends the capability restriction information to the target cell.

Further optionally, in this embodiment of this application, in a case that the UE camps on the source cell, the source cell may send a handover command to the UE. The handover command includes an identifier (for example, ID) of the target cell, and sends the capability restriction information to the target cell.

Step 1002. The target cell determines handover configuration information based on the capability restriction information.

In this embodiment of this application, the handover configuration information is used for handing over the UE from the source cell to the target cell.

Further optionally, in this embodiment of this application, the UE may send a connection establishment request to the target cell based on the handover command, so the target cell may determine the handover configuration information based on the capability restriction information.

Further optionally, in this embodiment of this application, the handover configuration information may specifically include channel configuration information of the target cell.

It can be understood that during the cell handover procedure of the UE, the source cell sends the capability restriction information to the target cell, so the target cell may determine a handover configuration based on the capability restriction information.

It should be noted that for the description of "channel configuration information," reference may be made to the specific description in the related art. Details are not provided in this embodiment of this application.

Therefore, it can be known that since the source cell can send the capability restriction information to the target cell, allowing the target cell to determine the handover configuration information for handing over the UE from the source cell to the target cell, it can avoid radio resource collision between the UE and another UE after the UE is handed over to the target cell, thereby improving communication performance.

The communication method provided by this embodiment of this application may be performed by the UE (and/or the network device). In this embodiment of this application, the UE (and/or the network device) performing the communication method is used as an example for description.

FIG. 9 is a possible schematic structural diagram of a communication apparatus included in an embodiment of this application. As shown in FIG. 9, the communication apparatus 60 may include a sending module 61 and a restriction module 62.

The sending module 61 is configured to send a first request message to a network device, where the first request message includes capability restriction information of the communication apparatus 60, and the capability restriction information is used for restricting a target capability of the communication apparatus 60. The restriction module 62 is configured to restrict the target capability of the communication apparatus 60. The target capability includes at least one of the following: SCell-related capability and SCG-related capability.

In a possible implementation, the communication apparatus 60 is any communication apparatus of a multi-card communication device.

In a possible implementation, the restricting the target capability of the communication apparatus 60 includes at least one of the following: restricting the number of SCells; deactivating at least one SCell; deactivating an SCG; releasing at least one SCell; and releasing an SCG.

In a possible implementation, the capability restriction information includes at least one of the following: first indication information; first capability preference information; first configuration preference information; first related information; first measurement information; and first purpose indication. The first indication information is used to indicate the network device to restrict the target capability of the communication apparatus 60; the first capability preference information is used for configuring a capability restriction parameter of the target capability by frequency range, configuring a capability restriction parameter of the target capability by cell group CG, configuring a capability restriction parameter of the target capability by band, or configuring a capability restriction parameter of the target capability by communication apparatus; the first configuration preference information is used to indicate an SCell to be deactivated or released; the first related information is related information of an SCell to be deactivated or released; the first measurement information is measurement information of at least one SCell of the communication apparatus 60; and the first purpose indication is used to indicate a request purpose of the first request message.

In a possible implementation, the first indication information includes at least one of the following: restriction information; first capability indication information; and capability restriction duration information. The restriction information is used to indicate that the communication apparatus 60 needs to restrict the target capability of the communication apparatus 60; the first capability indication information is used to indicate whether to use a maximum capability value of the target capability; and the capability restriction duration information is used to indicate a duration of restricting the target capability of the communication apparatus 60.

In a possible implementation, the capability restriction parameter includes at least one of the following: first SCell number; first UL CC capability; first DL CC capability; first bandwidth capability; whether an SCG is supported or not; and first MIMO layer number. The first SCell number includes any one of the following: temporary maximum number of supportable SCells, temporary reduced-to number of supportable SCells, temporary restricted number of supportable SCells, temporary maximum number of activatable SCells, temporary reduced-to number of activatable SCells, and temporary restricted number of activatable SCells; the first UL CC capability includes any one of the following: temporary maximum supportable UL CC capability, temporary reduced-to supportable UL CC capability, temporary restricted-to supportable UL CC capability, temporary maximum activatable UL CC capability, temporary reduced-to activatable UL CC capability, and temporary restricted-to activatable UL CC capability; the first DL CC capability includes any one of the following: temporary maximum supportable DL CC capability, temporary reduced-to supportable DL CC capability, temporary restricted-to supportable DL CC capability, temporary maximum activatable DL CC capability, temporary reduced-to activatable DL CC capability, and temporary restricted-to activatable DL CC capability; the first bandwidth capability includes any one of the following: temporary maximum bandwidth capability, temporary reduced-to bandwidth capability, and temporary restricted-to bandwidth capability; and the first MIMO layer number includes any one of the following: temporary maximum MIMO layer number, temporary reduced-to MIMO layer number, and temporary restricted MIMO layer number.

In a possible implementation, the first configuration preference information includes at least one of the following: SCell deactivation indication; SCell release indication; deactivated SCell release indication; SCell indication information; SCG deactivation indication; and SCG release indication. The SCell deactivation indication is used to indicate to deactivate N configured SCells, N being a positive integer; the SCell release indication is used to indicate to release M configured SCells, M being a positive integer; the deactivated SCell release indication is used to indicate to release R deactivated SCells, R being a positive integer; the SCell indication information is used to indicate a target SCell to be released or deactivated, where the SCell indication information includes at least one of the following of the target SCell: CC information and SCell identifier; the SCG deactivation indication is used to indicate to deactivate a configured SCG; and the SCG release indication is used to indicate to release a configured SCG.

In a possible implementation, the first related information includes at least one of the following: frequency range information; CG information; node information; and RAT information.

In a possible implementation, the first measurement information includes at least one of the following: measurement report of the at least one SCell; and CSI report of an activated SCell in the at least one SCell. The measurement report includes at least one of the following: measurement report based on TRS and RSRP measurement report.

In a possible implementation, the restriction module 62 is specifically configured to: in a case that the communication apparatus 60 has received a first response message, restrict the target capability of the communication apparatus 60 based on the first response message. The first response message is a response message sent by the network device based on the capability restriction information.

In a possible implementation, the restriction module 62 is specifically configured to: in a case that a first timer expires, restrict the target capability of the communication apparatus 60 based on the capability restriction information.

In a possible implementation, the communication apparatus 60 provided in this embodiment of this application may further include a starting module. The starting module is configured to start a first timer when the communication apparatus 60 sends the first request message. A timing duration of the first timer is agreed in a protocol or configured by the network device.

In a possible implementation, the communication apparatus 60 provided in this embodiment of this application may further include a stopping module. The stopping module is configured to stop the first timer in a case that the communication apparatus 60 has received the first response message and the first timer is running. The first response message is a response message sent by the network device based on the capability restriction information.

In a possible implementation, the communication apparatus 60 provided in this embodiment of this application may further include a determining module. The determining module is configured to determine a temporary capability restriction, where the temporary capability restriction includes any one of the following: number of supportable SCells, number of supportable CCs, number of activatable SCells, number of activatable CCs, whether to support an SCG or not, and whether to activate an SCG or not. The sending module 61 is specifically configured to send the first request message to the network device based on the temporary capability restriction.

In a possible implementation, the capability restriction information is restriction information of the communication apparatus 60 in a target cell group, and the target cell group is an MCG or SCG. The sending module 61 is specifically configured to send, in the MCG, the first request message to the network device; in a case that the target cell group is the MCG, send, in the MCG, the first request message to the network device; or in a case that the target cell group is the SCG, send, in the SCG or the MCG, the first request message to the network device.

In a possible implementation, the communication apparatus 60 provided in this embodiment of this application may further include a receiving module. The receiving module is configured to receive first configuration information from the network device. The first configuration information is used to indicate to the communication apparatus 60 whether to send the first request message or not.

In a possible implementation, the first configuration information includes at least one of the following: whether restricting an SCell-related capability is supported or not; whether restricting an SCG-related capability is supported or not; whether deactivating an SCell is supported or not; whether releasing an SCell is supported or not; whether deactivating an SCG is supported or not; whether releasing an SCG is supported or not; whether first information in the capability restriction information is supported or not; and timing duration of a first timer. The first information includes at least one of the following: first configuration preference information and first measurement information.

In a possible implementation, the communication apparatus 60 provided in this embodiment of this application may further include a restoration module. The restoration module is configured to restore the target capability of the communication apparatus 60 after the communication apparatus 60 has restricted the target capability of the communication apparatus 60 for a first duration. The first duration is a duration of restricting the target capability of the communication apparatus 60 indicated by the capability restriction information.

In a possible implementation, the communication apparatus 60 provided in this embodiment of this application may further include a starting module. The starting module is configured to send a second timer when the communication apparatus 60 restricts the target capability of the communication apparatus 60. A timing duration of the second timer is the first duration.

In a possible implementation, the sending module 61 is further configured to send a second request message to the network device, where the second request message includes capability restoration information of the communication apparatus 60, and the capability restoration information is used for restoring the target capability of the communication apparatus 60. The communication apparatus 60 provided in this embodiment of this application may further include a restoration module. The restoration module is configured to restore the target capability of the communication apparatus 60.

In a possible implementation, the restoration module is specifically configured to restore the target capability based on at least one first range. The first range includes any one of the following: frequency range, CG, band, and communication apparatus.

In a possible implementation, the capability restoration information includes at least one of the following: second indication information; and second capability preference information. The second indication information is used to indicate the network device to restore the target capability of the communication apparatus 60; and the second capability preference information is used for separately configuring a capability restoration parameter of the target capability by frequency range, separately configuring a capability restoration parameter of the target capability by CG, separately configuring a capability restoration parameter of the target capability by band, or separately configuring a capability restoration parameter of the target capability by communication apparatus.

In a possible implementation, the second indication information includes at least one of the following: restoration information; and second capability indication information. The restoration information is used to indicate that the communication apparatus 60 needs to restore the target capability of the communication apparatus 60; and the second capability indication information is used to indicate to use a maximum capability value of the target capability.

In the communication apparatus provided in this embodiment of this application, the communication apparatus can send the capability restriction information of the communication apparatus to the network device, and restrict the SCell-related capability (and/or the SCG-related capability) of the communication apparatus to reduce radio resources occupied by the communication apparatus. Therefore, it can avoid that the communication apparatus occupies too many radio resources, so that radio resource collision between the communication apparatus and another communication apparatus can be avoided, thereby avoiding that the communication apparatus (and/or the another communication apparatus) cannot execute a task, and thus improving communication performance.

The communication apparatus in the embodiments of this application may be an electronic device, for example an electronic device having an operating system, or may be a component of an electronic device, for example, an integrated circuit or a chip. The electronic device may be a terminal or a device other than terminals. For example, the terminal may include but is not limited to the types of the terminal 11 listed above, and the other devices may be servers, network attached storage (Network Attached Storage, NAS), or the like, which are not specifically limited in the embodiments of this application.

The communication apparatus provided in this embodiment of this application can implement processes implemented in the method embodiments of FIG. 1 to FIG. 8, and achieve the same technical effects. To avoid repetition, details are not described herein again.

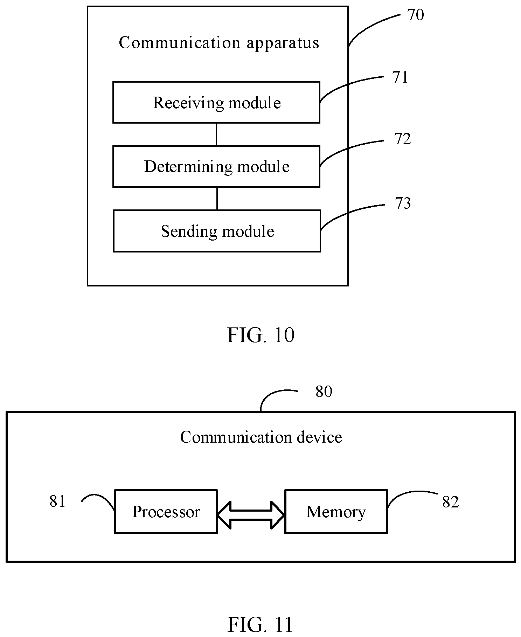

FIG. 10 is a possible schematic structural diagram of a communication apparatus included in an embodiment of this application. As shown in FIG. 10, the communication apparatus 70 may include a receiving module 71, a determining module 72, and a sending module 73.

The receiving module 71 is configured to receive a first request message from UE, where the first request message includes capability restriction information of the UE. The determining module 72 is configured to determine target parameter information of at least one second range based on the capability restriction information, where the second range includes any one of the following: frequency range, cell group CG, band, and UE. The sending module 73 is configured to send a first response message to the UE, where the first response message includes the target parameter information. The target parameter information is used by the UE to restrict a target capability of the UE or reconfigure the UE.

In a possible implementation, the network device 70 provided in this embodiment of this application includes an MN and an SN, and the first request message is sent by the UE in an MCG to the communication apparatus 70. The sending module 73 is further configured to send the first request message or the capability restriction information of the MN to the SN.

In a possible implementation, the communication apparatus 70 provided in this embodiment of this application may further include a storing module. The storing module is configured to store second information. The second information includes at least one of the following: the capability restriction information, and the target parameter information.

In a possible implementation, the communication apparatus 70 provided in this embodiment of this application may further include a release module. The release module is configured to release the second information in a case that a preset condition is met.

In a possible implementation, the preset condition includes any one of the following: the communication apparatus 70 has released a connection of the UE; and the communication apparatus 70 has received a second request message sent by the UE. The second request message is used to request the communication apparatus 70 to restore the target capability of the UE.

According to the communication apparatus provided in this embodiment of this application, the communication apparatus can receive the capability restriction information from the UE and send the target parameter information of at least one second range determined to the UE based on that capability restriction information, so that the UE can restrict the target capability of the UE (or reconfigure the UE) based on the target parameter information at least one second range, to reduce radio resources occupied by the UE. Therefore, it can avoid a situation that the UE occupies too many radio resources, thereby avoiding radio resource collision between the UE and another UE, and thus avoiding a situation that the UE (and/or the another UE) cannot execute a task. In this way, communication performance can be improved.

The communication apparatus in the embodiments of this application may be an electronic device, for example an electronic device having an operating system, or may be a component of an electronic device, for example, an integrated circuit or a chip. The electronic device may be a terminal or a device other than terminals. For example, the terminal may include but is not limited to the types of the terminal 11 listed above, and the other devices may be servers, network attached storage (Network Attached Storage, NAS), or the like, which are not specifically limited in the embodiments of this application.

The communication apparatus provided in this embodiment of this application can implement processes implemented in the method embodiments of FIG. 1 to FIG. 8, and achieve the same technical effects. To avoid repetition, details are not described herein again.

Optionally, in this embodiment of this application, as shown in FIG. 11, an embodiment of this application further provides a communication device 80 including a processor 81 and a memory 82. The memory 82 stores a program or instructions capable of running on the processor 81. For example, in a case that the communication device 80 is a terminal, and when the program or instructions are executed by the processor 81, the steps of the communication method embodiment corresponding to the foregoing terminal are implemented, with the same technical effects achieved. In case that the communication device 80 is a network device, when the program or the instructions are executed by the processor 81, the steps of the communication method embodiment corresponding to the foregoing network device are implemented, with the same technical effects achieved. To avoid repetition, details are not described herein again.

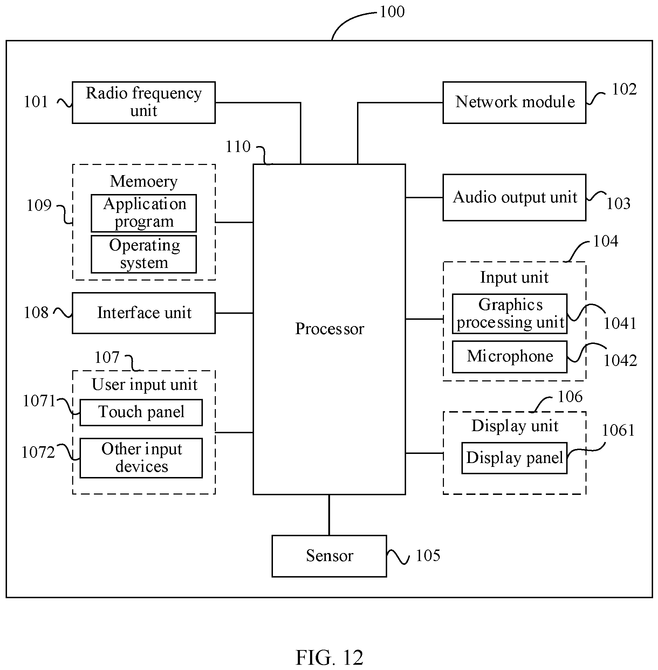

An embodiment of this application further provides a terminal, including a processor and a communication interface. The communication interface is configured to send a first request message to a network device. The first request message includes capability restriction information of the terminal. The capability restriction information is used to restrict a target capability of the terminal. The processor is configured to restrict the target capability of the terminal. The target capability includes at least one of the following: SCell-related capability and SCG-related capability. This terminal embodiment corresponds to the communication method embodiment corresponding to the foregoing terminal. All processes and implementations in the foregoing method embodiment can be applicable to this terminal embodiment, with the same technical effect achieved. Specifically, FIG. 12 is a schematic diagram of a hardware structure of a terminal implementing the embodiments of this application.

The terminal 100 includes but is not limited to at least part of these components: a radio frequency unit 101, a network module 102, an audio output unit 103, an input unit 104, a sensor 105, a display unit 106, a user input unit 107, an interface unit 108, a memory 109, a processor 110, and the like.

It can be understood by those skilled in the art that the terminal 100 may further include a power supply (for example, battery) supplying power to the components. The power supply may be logically connected to the processor 110 via a power management system, so that functions such as charge management, discharge management, and power consumption management are implemented via the power management system. The structure of the terminal shown in FIG. 12 does not constitute any limitation on the terminal, and the terminal may include more or fewer components than shown in the figure, or combine some of the components, or have different arrangements of the components. Details are not described herein.

It should be understood that in this embodiment of this application, the input unit 104 may include a graphics processing unit (Graphics Processing Unit, GPU) 1041 and a microphone 1042. The graphics processing unit 1041 processes image data of still pictures or videos that are obtained by an image capture apparatus (for example, camera) in an image or video capture mode. The display unit 106 may include a display panel 1061. The display panel 1061 may be configured in a form of a liquid crystal display, an organic light-emitting diode display, or the like. The user input unit 107 includes at least one of a touch panel 1071 and other input devices 1072. The touch panel 1071 is also referred to as a touchscreen. The touch panel 1071 may include two parts: a touch detection apparatus and a touch controller. The other input devices 1072 may include but are not limited to a physical keyboard, a function button (for example, volume control button or on/off button), a trackball, a mouse, and a joystick. Details are not described herein.

In this embodiment of this application, the radio frequency unit 101 receives downlink data from a network device and transfers the data to the processor 110 for processing; and the radio frequency unit 101 can additionally send uplink data to the network device. Generally, the radio frequency unit 101 includes but is not limited to an antenna, an amplifier, a transceiver, a coupler, a low noise amplifier, a duplexer, and the like.

The memory 109 may be configured to store software programs or instructions and various data. The memory 109 may include a first storage are for storing programs or instructions and a second storage area for storing data. The first storage area may store an operating system, an application program or instructions required by at least one function (for example, a sound playback function or an image playback function), and the like. In addition, the memory 109 may include a volatile memory or a non-volatile memory, or the memory 109 may include a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronization link dynamic random access memory (Synch link DRAM, SLDRAM), and a direct rambus random access memory (Direct Rambus RAM, DRRAM). The memory 109 of the embodiments of this application includes but is not be limited to these and any other applicable types of memories.

The processor 110 may include one or more processing units. Optionally, the processor 110 may integrate an application processor and a modem processor. The application processor primarily processes operations involving an operating system, user interface, application program, or the like. The modem processor primarily processes radio communication signals, for example, being a baseband processor. It can be understood that a modem processor may alternatively skip being integrated in the processor 110.

The radio frequency unit 101 is configured to send a first request message to a network device, where the first request message includes capability restriction information of the terminal, and the capability restriction information is used for restricting a target capability of the terminal.

The processor 110 is configured to restrict the target capability of the terminal.

The target capability includes at least one of the following: SCell-related capability and SCG-related capability.

According to the terminal provided in this embodiment of this application, the terminal can send the capability restriction information of the terminal to the network device, and restrict the SCell-related capability (and/or the SCG-related capability) of the terminal to reduce radio resources occupied by the terminal. Therefore, it can avoid that the terminal occupies too many radio resources, so that radio resource collision between the terminal and another terminal can be avoided, thereby avoiding that the terminal (and/or the another terminal) cannot execute a task, and thus improving communication performance.

Optionally, in this embodiment of this application, the processor 110 is specifically configured to: in a case that the terminal has received a first response message, restrict the target capability of the terminal based on the first response message.

The first response message is a response message sent by the network device based on the capability restriction information.

Therefore, it can be known that the terminal can restrict the target capability of the terminal (or reconfigure the terminal) based on the target parameter information of at least one second range, to reduce radio resources occupied by the terminal. Therefore, it can avoid that the terminal occupies too many radio resources, so that radio resource collision between the terminal and another terminal can be avoided, thereby avoiding that the terminal (and/or the another terminal) cannot execute a task, and thus improving communication performance.

Optionally, in this embodiment of this application, the processor 110 is specifically configured to restrict the target capability of the terminal based on the capability restriction information in a case that a first timer expires.

Therefore, it can be known that since the terminal can directly restrict the target capability of the terminal in a case that the first timer expires, it can avoid a situation that as a result of the network device not responding to the first request message, the terminal cannot restrict the target capability of the terminal. This can avoid radio resource collision between the terminal and the another terminal, avoiding a situation that the terminal (and/or the another terminal) cannot execute a task, thereby improving communication performance.

Optionally, in this embodiment of this application, the processor 110 is further configured to start a first timer when the terminal sends the first request message.

A timing duration of the first timer is agreed in a protocol or configured by the network device.

Optionally, in this embodiment of this application, the processor 110 is further configured to stop the first timer in a case that the terminal has received the first response message and the first timer is running.

The first response message is a response message sent by the network device based on the capability restriction information.

Optionally, in this embodiment of this application, the processor 110 is further configured to determine a temporary capability restriction, where the temporary capability restriction includes any one of the following: number of supportable SCells, number of supportable CCs, number of activatable SCells, number of activatable CCs, whether to support an SCG or not, and whether to activate an SCG or not.

The radio frequency unit 101 is specifically configured to send the first request message to the network device based on the temporary capability restriction.

Therefore, it can be known that the terminal can send the first request message to the network device based on the temporary capability restriction determined, thereby avoiding a situation that restricting the target capability of the terminal does not meet requirements of the terminal. In this way, the communication performance can be improved.

Optionally, in this embodiment of this application, the capability restriction information is restriction information of the terminal in a target cell group, and the target cell group is an MCG or SCG.

The radio frequency unit 101 is specifically configured to send, in the MCG, the first request message to the network device; in a case that the target cell group is the MCG, send, in the MCG, the first request message to the network device; or in a case that the target cell group is the SCG, send, in the SCG or the MCG, the first request message to the network device.

Optionally, in this embodiment of this application, the radio frequency unit 101 is further configured to receive first configuration information from the network device.

The first configuration information is used to indicate to the terminal whether to send the first request message or not.

Optionally, in this embodiment of this application, the processor 110 is further configured to restore the target capability of the terminal after the terminal has restricted the target capability of the terminal for a first duration.

The first duration is a duration of restricting the target capability of the terminal indicated by the capability restriction information.

Therefore, it can be known that since the target capability of the terminal can be restored after the terminal has restricted the target capability of the terminal for the first duration, it can avoid a situation that a data transmission rate of the terminal cannot be maximized caused by restricting the target capability of the terminal.

Optionally, in this embodiment of this application, the processor 110 is further configured to start a second timer when the terminal restricts the target capability of the terminal.

A timing duration of the second timer is the first duration.

Optionally, in this embodiment of this application, the radio frequency unit 101 is further configured to send a second request message to the network device, where the second request message includes capability restoration information of the terminal, and the capability restoration information is used for restoring a target capability of the terminal.

The processor 110 is further configured to restore the target capability of the terminal.

Therefore, it can be known that since the terminal can restore the target capability of the terminal, it can avoid a situation that a data transmission rate of the terminal cannot be maximized caused by restricting the target capability of the terminal.

Optionally, in this embodiment of this application, the processor 110 is further configured to restore the target capability based on at least one first range.

The first range includes any one of the following: frequency range, CG, band, and terminal.

An embodiment of this application further provides a network device, including a processor and a communication interface. The communication interface is configured to receive a first request message from a terminal, where the first request message includes capability restriction information of the terminal. The processor is configured to determine target parameter information of at least one second range based on the capability restriction information, where the second range includes any one of the following: frequency range, cell group CG, band, and terminal. The communication interface is further configured to send a first response message to the terminal, where the first response message includes the target parameter information. The target parameter information is used by the terminal to restrict a target capability of the terminal or reconfigure the terminal. The network device embodiment corresponds to the communication method embodiment corresponding to the foregoing network device. All implementations in the foregoing method embodiment may be applicable to the network device embodiment, with the same technical effect achieved.

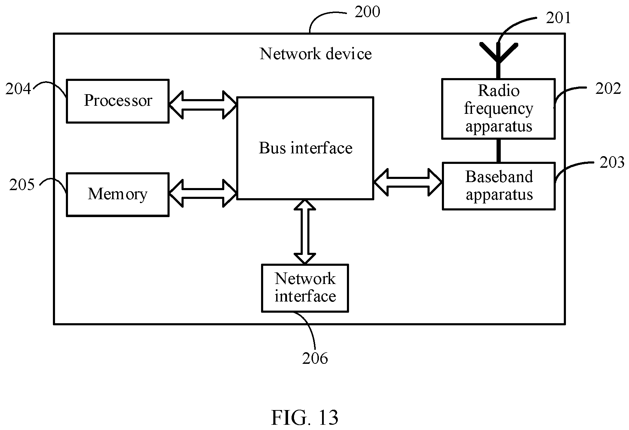

Specifically, an embodiment of this application further provides a network device. As shown in FIG. 13, the network device 200 includes an antenna 201, a radio frequency apparatus 202, and a baseband apparatus 203, a processor 204, and a memory 205. The antenna 201 is connected to the radio frequency apparatus 202. In uplink, the radio frequency apparatus 202 receives information through the antenna 201, and sends the received information to the baseband apparatus 203 for processing. In downlink, the baseband apparatus 203 processes to-be-sent information, and sends the information to the radio frequency apparatus 202; and the radio frequency apparatus 202 processes the received information and then sends the information out through the antenna 201.

The method executed by the network device in the foregoing embodiments may be implemented on the baseband apparatus 203. The baseband apparatus 203 includes a baseband processor.

The baseband apparatus 203 may include, for example, at least one baseband processing unit, where a plurality of chips are disposed on the baseband processing unit. As shown in FIG. 13, one of the chips is, for example, a baseband processor, and connected to the memory 205 through a bus interface, to invoke the program in the memory 205 to perform the operations of the network device shown in the foregoing method embodiment.

The network device further includes a network interface 206, where the interface is, for example, a common public radio interface (Common Public Radio Interface, CPRI).

Specifically, the network device 200 in this embodiment of the present invention further includes: an instruction or program stored in the memory 205 and executable on the processor 204. The processor 204 invokes the instruction or program in the memory 205 to execute the method executed by the modules shown in FIG. 10, with the same technical effects achieved. To avoid repetition, details are not described herein again.

The radio frequency apparatus 202 is configured to receive a first request message from a terminal, where the first request message includes capability restriction information of the terminal.

The baseband apparatus 203 is configured to determine target parameter information of at least one second range based on the capability restriction information, where the second range includes any one of the following: frequency range, cell group CG, band, and terminal.

The radio frequency apparatus 202 is further configured to send a first response message to the terminal, where the first response message includes the target parameter information.

The target parameter information is used by the terminal to restrict a target capability of the terminal or reconfigure the terminal.

According to the network device provided in this embodiment of this application, since the network device can receive the capability restriction information from the terminal and send the target parameter information of at least one second range determined to the terminal based on that capability restriction information, the terminal can restrict the target capability of the terminal (or reconfigure the terminal) based on the target parameter information of at least one second range, to reduce radio resources occupied by the terminal. Therefore, it can avoid a situation that the terminal occupies too many radio resources, thereby avoiding radio resource collision between the terminal and another terminal, and thus avoiding a situation that the terminal (and/or the another terminal) cannot execute a task. In this way, communication performance can be improved.

Optionally, in this embodiment of this application, the network device includes an MN and an SN. The first request message is sent by the terminal to the network device in an MCG.

The radio frequency apparatus 202 is further configured to send the first request message or the capability restriction information of the MN to the SN.

Optionally, in this embodiment of this application, the memory 205 is configured to store second information.

The second information includes at least one of the following: the capability restriction information, and the target parameter information.

Therefore, it can be known that since the network device can store the capability restriction information and/or target parameter information of at least one second range, in a case that the terminal requests the network device to restrict the target capability of the terminal again, the network device can directly send the first response message to the terminal without re-acknowledgement from the network device.

Optionally, in this embodiment of this application, the memory 205 is further configured to release the second information in a case that a preset condition is met.

Therefore, it can be known that since the network device may release the second information in case that the preset condition is met, storage space in the network device can be saved.

Optionally, in this embodiment of this application, the network device includes a source cell and a target cell.

The radio frequency apparatus 202 is further configured to send the capability restriction information of the source cell to the target cell.

The baseband apparatus 203 is further configured to determine handover configuration information based on the capability restriction information of the target cell.

The handover configuration information is used for handing over the terminal from the source cell to the target cell.

Therefore, it can be known that since the source cell can send the capability restriction information to the target cell, allowing the target cell to determine the handover configuration information for handing over the terminal from the source cell to the target cell, it can avoid radio resource collision between the terminal and another terminal after the terminal is handed over to the target cell, thereby improving communication performance.

An embodiment of this application further provides a readable storage medium. The readable storage medium stores a program or instructions, and when the program or instructions are executed by a processor, the processes of the communication method embodiment corresponding to the foregoing terminal are implemented, or the processes of the communication method embodiment corresponding to the foregoing network device are implemented, with the same technical effects achieved. To avoid repetition, details are not described herein again.

The processor is a processor in the terminal described in the foregoing embodiment. The readable storage medium includes a computer-readable storage medium such as a computer read-only memory ROM, a random access memory RAM, a magnetic disk, or an optical disc.

An embodiment of this application further provides a chip. The chip includes a processor and a communication interface, the communication interface is coupled to the processor, and the processor is configured to run a program or instructions to implement the processes of the communication method embodiment corresponding to the foregoing terminal, or the processes of the communication method embodiment corresponding to the foregoing network device, with the same technical effects achieved. To avoid repetition, details are not described herein again.

It should be understood that the chip mentioned in this embodiment of this application may also be referred to as a system-level chip, a system chip, a chip system, a system-on-chip, or the like.

An embodiment of this application further provides a computer program/program product, where the computer program/program product is stored in a storage medium, and the computer program product is executed by at least one processor to implement the processes of the foregoing communication method embodiments, with the same technical effects achieved. To avoid repetition, details are not described herein again.

An embodiment of this application further provides a communication system including a terminal and a network device. The terminal is configured to execute the steps of the communication method corresponding to the foregoing terminal, and the network device is configured to execute the steps of the method corresponding to the foregoing network device.

It should be noted that the terms "include", "comprise", or any of their variants are intended to cover a non-exclusive inclusion, such that a process, method, article, or apparatus that includes a series of elements includes not only those elements but also other elements that are not expressly listed, or further includes elements inherent to such process, method, article, or apparatus. Without more constraints, an element preceded by "includes a..." does not preclude the presence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described method may be performed in an order different from the order described, and steps may be added, omitted, or combined. In addition, features described with reference to some examples may be combined in other examples.

Based on the above description of embodiments, persons skilled in the art can clearly understand that the method in the foregoing embodiments can be implemented through software on a necessary hardware platform or certainly through hardware only, but in many cases, the former is the more preferred implementation. Based on such an understanding, the technical solutions of this application essentially or the part contributing to the prior art may be implemented in a form of a computer software product. The software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other manners without departing from principles of this application and the protection scope of the claims, and all such manners fall within the protection scope of this application.

## Claims

1. A communication method, wherein the method comprises:
sending, by user equipment UE, a first request message to a network device, wherein the first request message comprises capability restriction information of the UE, and the capability restriction information is used for restricting a target capability of the UE; and
restricting, by the UE, the target capability of the UE; wherein
the target capability comprises at least one of the following: secondary cell SCell-related capability and secondary cell group SCG-related capability.

2. The method according to claim 1, wherein the UE is any UE of a multi-card communication device.

3. The method according to claim 1, wherein the restricting the target capability of the UE comprises at least one of the following:
restricting a number of SCells;
deactivating at least one SCell;
deactivating an SCG;
releasing at least one SCell; and
releasing an SCG.

4. The method according to claim 1, wherein the capability restriction information comprises at least one of the following:
first indication information;
first capability preference information;
first configuration preference information;
first related information;
first measurement information; and
first purpose indication; wherein
the first indication information is used to indicate the network device to restrict the target capability of the UE;
the first capability preference information is used for configuring a capability restriction parameter of the target capability by frequency range, configuring a capability restriction parameter of the target capability by cell group CG, configuring a capability restriction parameter of the target capability by band, or configuring a capability restriction parameter of the target capability by UE;
the first configuration preference information is used to indicate an SCell to be deactivated or released;
the first related information is related information of an SCell to be deactivated or released;
the first measurement information is measurement information of at least one SCell of the UE; and
the first purpose indication is used to indicate a request purpose of the first request message.

5. The method according to claim 4, wherein the first indication information comprises at least one of the following:
restriction information;
first capability indication information; and
capability restriction duration information; wherein
the restriction information is used to indicate that the UE needs to restrict the target capability of the UE;
the first capability indication information is used to indicate whether to use a maximum capability value of the target capability; and
the capability restriction duration information is used to indicate a duration of restricting the target capability of the UE.

6. The method according to claim 4, wherein the capability restriction parameter comprises at least one of the following:
first SCell number;
first uplink UL component carrier CC capability;
first downlink DL CC capability;
first bandwidth capability;
whether an SCG is supported or not; and
first multiple-input multiple-output MIMO layer number; wherein
the first SCell number comprises any one of the following: temporary maximum number of supportable SCells, temporary reduced-to number of supportable SCells, temporary restricted number of supportable SCells, temporary maximum number of activatable SCells, temporary reduced-to number of activatable SCells, and temporary restricted number of activatable SCells;
the first UL CC capability comprises any one of the following: temporary maximum supportable UL CC capability, temporary reduced-to supportable UL CC capability, temporary restricted-to supportable UL CC capability, temporary maximum activatable UL CC capability, temporary reduced-to activatable UL CC capability, and temporary restricted-to activatable UL CC capability;
the first DL CC capability comprises any one of the following: temporary maximum supportable DL CC capability, temporary reduced-to supportable DL CC capability, temporary restricted-to supportable DL CC capability, temporary maximum activatable DL CC capability, temporary reduced-to activatable DL CC capability, and temporary restricted-to activatable DL CC capability;
the first bandwidth capability comprises any one of the following: temporary maximum bandwidth capability, temporary reduced-to bandwidth capability, and temporary restricted-to bandwidth capability; and
the first MIMO layer number comprises any one of the following: temporary maximum MIMO layer number, temporary reduced-to MIMO layer number, and temporary restricted MIMO layer number.

7. The method according to claim 4, wherein the first configuration preference information comprises at least one of the following:
SCell deactivation indication;
SCell release indication;
deactivated SCell release indication;
SCell indication information;
SCG deactivation indication; and
SCG release indication; wherein
the SCell deactivation indication is used to indicate to deactivate N configured SCells, N being a positive integer;
the SCell release indication is used to indicate to release M configured SCells, M being a positive integer;
the deactivated SCell release indication is used to indicate to release R deactivated SCells, R being a positive integer;
the SCell indication information is used to indicate a target SCell to be released or deactivated, wherein the SCell indication information comprises at least one of the following of the target SCell: CC information and SCell identifier;
the SCG deactivation indication is used to indicate to deactivate a configured SCG; and
the SCG release indication is used to indicate to release a configured SCG.

8. The method according to claim 4, wherein the first related information comprises at least one of the following:
frequency range information;
CG information;
node information; and
radio access technology RAT information.

9. The method according to claim 4, wherein the first measurement information comprises at least one of the following:
measurement report of the at least one SCell; and
channel state information CSI report of an activated SCell in the at least one SCell; wherein
the measurement report comprises at least one of the following: measurement report based on tracking reference signal TRS and reference signal received power RSRP measurement report.

10. The method according to any one of claims 1 to 9, wherein the restricting, by the UE, the target capability of the UE comprises:
in a case that the UE has received a first response message, restricting, by the UE, the target capability of the UE based on the first response message; wherein
the first response message is a response message sent by the network device based on the capability restriction information.

11. The method according to any one of claims 1 to 9, wherein the restricting, by the UE, the target capability of the UE comprises:
in a case that a first timer expires, restricting, by the UE, the target capability of the UE based on the capability restriction information.

12. The method according to claim 11, wherein within a first duration since the first request message is sent, in a case that the UE has not received a first response message, before the restricting, by the UE, the target capability of the UE based on the capability restriction information, the method further comprises:
starting, by the UE, a first timer when the UE sends the first request message; wherein
a timing duration of the first timer is agreed in a protocol or configured by the network device.

13. The method according to claim 12, wherein after the starting a first timer, the method further comprises:
stopping, by the UE, the first timer in a case that the UE has received the first response message and the first timer is running; wherein
the first response message is a response message sent by the network device based on the capability restriction information.

14. The method according to claim 1, wherein before the sending, by UE, a first request message to a network device, the method further comprises:
determining, by the UE, a temporary capability restriction, wherein the temporary capability restriction comprises any one of the following: number of supportable SCells, number of supportable CCs, number of activatable SCells, number of activatable CCs, whether to support an SCG or not, and whether to activate an SCG or not; and
the sending, by UE, a first request message to a network device comprises:
sending, by the UE, the first request message to the network device based on the temporary capability restriction.

15. The method according to claim 1, wherein the capability restriction information is restriction information of the UE in a target cell group, and the target cell group is a master cell group MCG or SCG; and
the sending, by UE, a first request message to a network device comprises:
sending, by the UE in the MCG, the first request message to the network device,
in a case that the target cell group is the MCG, sending, by the UE in the MCG, the first request message to the network device, or
in a case that the target cell group is the SCG, sending, by the UE in the SCG or the MCG, the first request message to the network device.

16. The method according to claim 1, wherein before the sending, by UE, a first request message to a network device, the method further comprises:
receiving, by the UE, first configuration information from the network device; wherein
the first configuration information is used to indicate to the UE whether to send the first request message or not.

17. The method according to claim 16, wherein the first configuration information comprises at least one of the following:
whether restricting an SCell-related capability is supported or not;
whether restricting an SCG-related capability is supported or not;
whether deactivating an SCell is supported or not;
whether releasing an SCell is supported or not;
whether deactivating an SCG is supported or not;
whether releasing an SCG is supported or not;
whether first information in the capability restriction information is supported or not; and
timing duration of a first timer; wherein
the first information comprises at least one of the following: first configuration preference information and first measurement information.

18. The method according to any one of claims 1 to 9, wherein after the restricting, by the UE, the target capability of the UE, the method further comprises:
restoring, by the UE, the target capability of the UE after the UE has restricted the target capability of the UE for a first duration; wherein
the first duration is a duration of restricting the target capability of the UE indicated by the capability restriction information.

19. The method according to claim 18, wherein before the restoring the target capability of the UE after the UE has restricted the target capability of the UE for a first duration, the method further comprises:
starting, by the UE, a second timer when the UE restricts the target capability of the UE; wherein
a timing duration of the second timer is the first duration.

20. The method according to claim 1, wherein after the restricting the target capability of the UE, the method further comprises:
sending, by the UE, a second request message to the network device, wherein the second request message comprises capability restoration information of the UE, and the capability restoration information is used for restoring the target capability of the UE; and
restoring, by the UE, the target capability of the UE.

21. The method according to claim 20, wherein the restoring, by the UE, the target capability of the UE comprises:
restoring, by the UE, the target capability based on at least one first range; wherein
the first range comprises any one of the following: frequency range, CG, band, and UE.

22. The method according to claim 20, wherein the capability restoration information comprises at least one of the following:
second indication information; and
second capability preference information; wherein
the second indication information is used to indicate the network device to restore the target capability of the UE; and
the second capability preference information is used for separately configuring a capability restoration parameter of the target capability by frequency range, separately configuring a capability restoration parameter of the target capability by CG, separately configuring a capability restoration parameter of the target capability by band, or separately configuring a capability restoration parameter of the target capability by UE.

23. The method according to claim 22, wherein the second indication information comprises at least one of the following:
restoration information; and
second capability indication information; wherein
the restoration information is used to indicate that the UE needs to restore the target capability of the UE; and
the second capability indication information is used to indicate to use a maximum capability value of the target capability.

24. A communication method, wherein the method comprises:
receiving, by a network device, a first request message from UE, wherein the first request message comprises capability restriction information of the UE;
determining, by the network device, target parameter information of at least one second range based on the capability restriction information, wherein the second range comprises any one of the following: frequency range, cell group CG, band, and UE; and
sending, by the network device, a first response message to the UE, wherein the first response message comprises the target parameter information; wherein
the target parameter information is used by the UE to restrict a target capability of the UE or reconfigure the UE.

25. The method according to claim 24, wherein the network device comprises a master node MN and a secondary node SN, and the first request message is sent by the UE in an MCG to the network device; and
before the determining, by the network device, target parameter information of at least one second range for the UE based on the capability restriction information, the method further comprises:
sending, by the MN, the first request message or the capability restriction information to the SN.

26. The method according to claim 24, wherein after the receiving, by a network device, a first request message from UE, the method further comprises:
storing, by the network device, second information; wherein
the second information comprises at least one of the following: the capability restriction information, and the target parameter information.

27. The method according to claim 26, wherein after the storing, by the network device, second information, the method further comprises:
releasing, by the network device, the second information in a case that a preset condition is met.

28. The method according to claim 27, wherein the preset condition comprises any one of the following:
the network device has released a connection of the UE; and
the network device has received a second request message sent by the UE; wherein
the second request message is used to request the network device to restore the target capability of the UE.

29. The method according to claim 24, wherein the network device comprises a source cell and a target cell; and
after the receiving, by a network device, a first request message from UE, the method further comprises:
sending, by the source cell, the capability restriction information to the target cell; and
determining, by the target cell, handover configuration information based on the capability restriction information; wherein
the handover configuration information is used for handing over the UE from the source cell to the target cell.

30. A communication apparatus, wherein the communication apparatus comprises a sending module and a restriction module, wherein
the sending module is configured to send a first request message to a network device, wherein the first request message comprises capability restriction information of the communication apparatus, and the capability restriction information is used for restricting a target capability of the communication apparatus; and
the restriction module is configured to restrict the target capability of the communication apparatus; wherein the target capability comprises at least one of the following: SCell-related capability and SCG-related capability.

31. The communication apparatus according to claim 30, wherein the communication apparatus is any communication apparatus of a multi-card communication device.

32. The communication apparatus according to claim 30, wherein the restricting the target capability of the communication apparatus comprises at least one of the following:
restricting a number of SCells;
deactivating at least one SCell;
deactivating an SCG;
releasing at least one SCell; and
releasing an SCG.

33. The communication apparatus according to claim 30, wherein the capability restriction information comprises at least one of the following:
first indication information;
first capability preference information;
first configuration preference information;
first related information;
first measurement information; and
first purpose indication; wherein
the first indication information is used to indicate the network device to restrict the target capability of the communication apparatus;
the first capability preference information is used for configuring a capability restriction parameter of the target capability by frequency range, configuring a capability restriction parameter of the target capability by cell group CG, configuring a capability restriction parameter of the target capability by band, or configuring a capability restriction parameter of the target capability by communication apparatus;
the first configuration preference information is used to indicate an SCell to be deactivated or released;
the first related information is related information of an SCell to be deactivated or released;
the first measurement information is measurement information of at least one SCell of the communication apparatus; and
the first purpose indication is used to indicate a request purpose of the first request message.

34. The communication apparatus according to claim 33, wherein the first indication information comprises at least one of the following:
restriction information;
first capability indication information; and
capability restriction duration information; wherein
the restriction information is used to indicate that the communication apparatus needs to restrict the target capability of the communication apparatus;
the first capability indication information is used to indicate whether to use a maximum capability value of the target capability; and
the capability restriction duration information is used to indicate a duration of restricting the target capability of the communication apparatus.

35. The communication apparatus according to claim 33, wherein the capability restriction parameter comprises at least one of the following:
first SCell number;
first UL CC capability;
first DL CC capability;
first bandwidth capability;
whether an SCG is supported or not; and
first MIMO layer number; wherein
the first SCell number comprises any one of the following: temporary maximum number of supportable SCells, temporary reduced-to number of supportable SCells, temporary restricted number of supportable SCells, temporary maximum number of activatable SCells, temporary reduced-to number of activatable SCells, and temporary restricted number of activatable SCells;
the first UL CC capability comprises any one of the following: temporary maximum supportable UL CC capability, temporary reduced-to supportable UL CC capability, temporary restricted-to supportable UL CC capability, temporary maximum activatable UL CC capability, temporary reduced-to activatable UL CC capability, and temporary restricted-to activatable UL CC capability;
the first DL CC capability comprises any one of the following: temporary maximum supportable DL CC capability, temporary reduced-to supportable DL CC capability, temporary restricted-to supportable DL CC capability, temporary maximum activatable DL CC capability, temporary reduced-to activatable DL CC capability, and temporary restricted-to activatable DL CC capability;
the first bandwidth capability comprises any one of the following: temporary maximum bandwidth capability, temporary reduced-to bandwidth capability, and temporary restricted-to bandwidth capability; and
the first MIMO layer number comprises any one of the following: temporary maximum MIMO layer number, temporary reduced-to MIMO layer number, and temporary restricted MIMO layer number.

36. The communication apparatus according to claim 33, wherein the first configuration preference information comprises at least one of the following:
SCell deactivation indication;
SCell release indication;
deactivated SCell release indication;
SCell indication information;
SCG deactivation indication; and
SCG release indication; wherein
the SCell deactivation indication is used to indicate to deactivate N configured SCells, N being a positive integer;
the SCell release indication is used to indicate to release M configured SCells, M being a positive integer;
the deactivated SCell release indication is used to indicate to release R deactivated SCells, R being a positive integer;
the SCell indication information is used to indicate a target SCell to be released or deactivated, wherein the SCell indication information comprises at least one of the following of the target SCell: CC information and SCell identifier;
the SCG deactivation indication is used to indicate to deactivate a configured SCG; and
the SCG release indication is used to indicate to release a configured SCG.

37. The communication apparatus according to claim 33, wherein the first related information comprises at least one of the following:
frequency range information;
CG information;
node information; and
RAT information.

38. The communication apparatus according to claim 33, wherein the first measurement information comprises at least one of the following:
measurement report of the at least one SCell; and
CSI report of an activated SCell in the at least one SCell; wherein
the measurement report comprises at least one of the following: measurement report based on TRS and RSRP measurement report.

39. The communication apparatus according to any one of claims 30 to 38, wherein the restriction module is specifically configured to: in a case that the communication apparatus has received a first response message, restrict the target capability of the communication apparatus based on the first response message; wherein
the first response message is a response message sent by the network device based on the capability restriction information.

40. The communication apparatus according to any one of claims 30 to 38, wherein the restriction module is specifically configured to: in a case that a first timer expires, restrict the target capability of the communication apparatus based on the capability restriction information.

41. The communication apparatus according to claim 40, wherein the communication apparatus further comprises a starting module; wherein
the starting module is configured to start a first timer when the communication apparatus sends the first request message; wherein
a timing duration of the first timer is agreed in a protocol or configured by the network device.

42. The communication apparatus according to claim 41, wherein the communication apparatus further comprises a stopping module; wherein
the stopping module is configured to stop the first timer in a case that the communication apparatus has received the first response message and the first timer is running; wherein
the first response message is a response message sent by the network device based on the capability restriction information.

43. The communication apparatus according to claim 30, wherein the communication apparatus further comprises a determining module; wherein
the determining module is configured to determine a temporary capability restriction, wherein the temporary capability restriction comprises any one of the following: number of supportable SCells, number of supportable CCs, number of activatable SCells, number of activatable CCs, whether to support an SCG or not, and whether to activate an SCG or not; and
the sending module is specifically configured to send the first request message to the network device based on the temporary capability restriction determined by the determining module.

44. The communication apparatus according to claim 30, wherein the capability restriction information is restriction information of the communication apparatus in a target cell group, and the target cell group is an MCG or SCG; and
the sending module is specifically configured to send, in the MCG, the first request message to the network device; in a case that the target cell group is the MCG, send, in the MCG, the first request message to the network device; or in a case that the target cell group is the SCG, send, in the SCG or the MCG, the first request message to the network device.

45. The communication apparatus according to claim 30, wherein the communication apparatus further comprises a receiving module; wherein
the receiving module is configured to receive first configuration information from the network device; wherein the first configuration information is used to indicate to the communication apparatus whether to send the first request message or not.

46. The communication apparatus according to claim 45, wherein the first configuration information comprises at least one of the following:
whether restricting an SCell-related capability is supported or not;
whether restricting an SCG-related capability is supported or not;
whether deactivating an SCell is supported or not;
whether releasing an SCell is supported or not;
whether deactivating an SCG is supported or not;
whether releasing an SCG is supported or not;
whether first information in the capability restriction information is supported or not; and
timing duration of a first timer; wherein
the first information comprises at least one of the following: first configuration preference information and first measurement information.

47. The communication apparatus according to any one of claims 30 to 38, wherein the communication apparatus further comprises a restoration module; wherein
the restoration module is configured to restore the target capability of the communication apparatus after the communication apparatus has restricted the target capability of the communication apparatus for a first duration; wherein
the first duration is a duration of restricting the target capability of the communication apparatus indicated by the capability restriction information.

48. The communication apparatus according to claim 47, wherein the communication apparatus further comprises a starting module; wherein
the starting module is configured to send a second timer when the communication apparatus restricts the target capability of the communication apparatus; wherein
a timing duration of the second timer is the first duration.

49. The communication apparatus according to claim 30, the sending module is further configured to send a second request message to the network device, wherein the second request message comprises capability restoration information of the communication apparatus, and the capability restoration information is used for restoring the target capability of the UE; and
the communication apparatus further comprises a restoration module, wherein
the restoration module is configured to restore the target capability of the communication apparatus.

50. The communication apparatus according to claim 49, wherein the restoration module is specifically configured to restore the target capability based on at least one first range; wherein
the first range comprises any one of the following: frequency range, CG, band, and communication apparatus.

51. The communication apparatus according to claim 49, wherein the capability restoration information comprises at least one of the following:
second indication information; and
second capability preference information; wherein
the second indication information is used to indicate the network device to restore the target capability of the communication apparatus; and
the second capability preference information is used for separately configuring a capability restoration parameter of the target capability by frequency range, separately configuring a capability restoration parameter of the target capability by CG, separately configuring a capability restoration parameter of the target capability by band, or separately configuring a capability restoration parameter of the target capability by UE.

52. The communication apparatus according to claim 51, wherein the second indication information comprises at least one of the following:
restoration information; and
second capability indication information; wherein
the restoration information is used to indicate that the communication apparatus needs to restore the target capability of the communication apparatus; and
the second capability indication information is used to indicate to use a maximum capability value of the target capability.

53. A communication apparatus, wherein the communication apparatus comprises a receiving module, a determining module, and a sending module, wherein
the receiving module is configured to receive a first request message from UE, wherein the first request message comprises capability restriction information of the UE;
the determining module is configured to determine target parameter information of at least one second range based on the capability restriction information, wherein the second range comprises any one of the following:
frequency range, cell group CG, band, and UE; and
the sending module is configured to send a first response message to the UE, wherein the first response message comprises the target parameter information; wherein
the target parameter information is used by the UE to restrict a target capability of the UE or reconfigure the UE.

54. The communication apparatus according to claim 53, wherein the communication apparatus comprises an MN and an SN, and the first request message is sent by the UE in an MCG to the communication apparatus; and
the sending module is further configured to send the first request message or the capability restriction information of the MN to the SN.

55. The communication apparatus according to claim 53, wherein the communication apparatus further comprises a storing module; wherein
the storing module is configured to store second information; wherein
the second information comprises at least one of the following: the capability restriction information, and the target parameter information.

56. The communication apparatus according to claim 55, wherein the communication apparatus further comprises a release module; wherein
the release module is configured to release the second information in a case that a preset condition is met.

57. The communication apparatus according to claim 56, wherein the preset condition comprises any one of the following:
the communication apparatus has released a connection of the UE; and
the communication apparatus has received a second request message sent by the UE; wherein
the second request message is used to request the communication apparatus to restore the target capability of the UE.

58. The communication apparatus according to claim 53, wherein the communication apparatus comprises a source cell and a target cell; wherein
the sending module is further configured to send the capability restriction information of the source cell to the target cell; and
the determining module is further configured to determine handover configuration information based on the capability restriction information sent by the sending module; wherein
the handover configuration information is used for handing over the UE from the source cell to the target cell.

59. A terminal, comprising a processor and a memory, wherein the memory stores a program or instructions capable of running on the processor, and when the program or instructions are executed by the processor, the steps of the communication method according to any one of claims 1 to 23 are implemented.

60. A network device, comprising a processor and a memory, wherein the memory stores a program or instructions capable of running on the processor, and when the program or instructions are executed by the processor, the steps of the communication method according to any one of claims 24 to 29 are implemented.

61. A readable storage medium, wherein the readable storage medium stores a program or instructions, and when the program or instructions are executed by a processor, the steps of the communication method according to any one of claims 1 to 23 are implemented, or the steps of the communication method according to any one of claims 24 to 29 are implemented.
